Europäisches Patentamt

European Patent Office

Office européen des brevets

(11) Publication number: **0 037 240**

**B1**

(12) **EUROPEAN PATENT SPECIFICATION**

(45) Date of publication of patent specification: **12.11.86**

(51) Int. Cl.⁴: **B 23 H 1/02**

(21) Application number: **81301270.5**

(22) Date of filing: **25.03.81**

(54) Automatic cutting condition control equipment.

(30) Priority: **29.03.80 JP 40713/80**

(43) Date of publication of application:
**07.10.81 Bulletin 81/40**

(45) Publication of the grant of the patent:
**12.11.86 Bulletin 86/46**

(84) Designated Contracting States:
**CH DE FR GB LI**

(56) References cited:
**US-A-4 071 729**

**PATENTS ABSTRACTS OF JAPAN, vol. 3, no.
105, 5th September 1979, page 155 M-71;
PATENTS ABSTRACTS OF JAPAN, vol. 3, no.
123, 16th October 1979, page 13C61;**

(73) Proprietor: **FANUC LTD
3580, Shibokusa Aza-Komanba Oshino-mura
Minamitsuru-gun Yamanashi 401-05 (JP)**

(72) Inventor: **Haruki, Obara
No. 844-7, Hashimoto
Sagamihara-shi Kanagawa-ken, 229 (JP)**

(74) Representative: **Billington, Lawrence Emlyn
et al
HASELTINE LAKE & CO Hazlitt House 28
Southampton Buildings Chancery Lane
London WC2A 1AT (GB)**

Courier Press, Leamington Spa, England.

# Description

The present invention relates to an automatic cutting condition control equipment which in use automatically controls an electrical cutting discharge machine in accordance with the thickness of a workpiece (i.e. work). The electrical cutting discharge machine is a wire-cut machine.

A wire-cut, electric discharge machine cannot achieve optimum cutting of a workpiece unless electrical cutting conditions of the machine, which depend on a peak current Ip or a no-load voltage vs of its power source or the ON time $\tau_{on}$ and OFF time $\tau_{off}$ of a pulse current, are controlled sharply in accordance with the thickness of the workpiece. For example, in the case of the peak current Ip being not varied in accordance with the workpiece thickness, if a workpiece of small thickness is cut under the same conditions as those for a workpiece of large thickness, then a wire electrode will be broken; conversely, if the thick workpiece is cut under the same conditions as those for the thin workpiece, then a sufficient cutting speed will not be obtained. However, a manual operation for changing the electrical cutting conditions for each particular workpiece is very troublesome to an operator and, further, introduces difficulty in continuous, full automatic cutting of a work of uneven thickness. To solve such problems, there has already been proposed and put to practical use an automatic cutting condition change-over equipment which is capable of automatically changing over the electrical cutting conditions in response to a variation in the thickness of a work during cutting.

According to the conventional automatic cutting condition changeover equipment, for instance, cutting speeds corresponding to selected values of the peak current Ip and an optimum cutting condition are prestored in an electronic computer for each workpiece thickness, the thickness of a workpiece to be cut is estimated from an actual cutting speed and cutting condition through the use of the computer, and compared with the prestored optimum cutting condition and then the peak current Ip is changed over to an optimum value. However, this prior art equipment requires, in addition to the use of an electronic computer, a large number of experiments for obtaining the data to be prestored in the computer; furthermore, since all the data thus obtained must be prestored, their processing is very troublesome.

JP—A—54-81593, to which the preceding paragraph relates, discloses a device to control electric conditions for wire cutting in accordance with processing speed and thereby to increase processing speed and precision, while JP—A—54-101 732 discloses a wire cut discharge unit by which efficient working can be carried out by automatically setting the electrical condition to the optimal value with an operational amplifier. Both these prior art documents disclose that cutting speed is controlled in dependence upon workpiece thickness and a cutting condition, to maintain the working voltage substantially constant between the electrode and the workpiece and control the electrical cutting condition to be optimum. Setting up the control of the cutting speed however is complicated and requires a large number of experimental results to be taken. There is no simple and effective formula which can be employed to provide optimum cutting conditions under stable operation.

According to the present invention there is provided an automatic cutting condition control equipment for a wire-cut electric discharge machine, comprising a feed control circuit for controlling a cutting speed in dependence upon workpiece thickness and a cutting condition so that a mean working voltage between a cutting electrode and the workpiece may be substantially constant under stable cutting conditions, whereby when the control equipment is in use with a wire-cut electrical discharge machine, the electrical cutting condition of the cutting machine can be automatically controlled by the electrical cutting condition control equipment to be optimum in dependence upon the thickness of the workpiece being cut, the equipment being characterised by: an arithmetic logic unit for calculating as said cutting condition the result of an optimum cutting condition formula $(F+Fo) I-K$, where F is the cutting speed, I is the peak or mean cutting current, and Fo and K are constants under stable cutting conditions, which constants are determined by electrical cutting conditions other than the current and further by the materials of the workpiece and the wire electrode, and by the diameter of the wire electrode; and electrical cutting condition control means for controlling the value of the cutting current from a power source so that the output from the arithmetic logic unit may tend towards a value of zero.

A preferred embodiment of the present invention provides an automatic cutting condition changeover equipment which does not require an electronic computer and is easy to handle.

Moreover, it further provides an automatic cutting condition changeover equipment which is designed to lighten the cutting condition at a place where cutting is unstable, so as to prevent the breaking of a wire electrode.

In the preferred embodiment, in a case where the peak cutting current remains unchanged although the thickness of a workpiece has increased, the cutting speed lowers and, consequently, the result of the calculation of the optimum cutting condition formula becomes minus (i.e. negative) and the peak current is increased by the electrical cutting condition changeover means. Conversely, when the peak current remains unchanged regardless of a decrease in the thickness of the workpiece, since the cutting speed increases, the calculation result of the abovesaid formula becomes plus (i.e. positive) and the peak current is decreased by the electrical cutting condition changeover means.

Further, a detector may be provided for detecting a variation in the mean working voltage and the constants of the optimum cutting condition formula may be altered in accordance with the variation in the mean working voltage under unstable cutting conditions, to prevent the breakage of the wire electrode at a place where cutting is unstable.

For a better understanding of the invention and to show how it may be put into effect reference will now be made, by way of example, to the accompanying drawings in which.

Fig. 1 is an electric circuit diagram showing a general arrangement of a power source for use in wire-cut, electric discharge machines; and

Fig. 2 is a block diagram illustrating the principal part of an embodiment of an automatic cutting condition change-over equipment according to the present invention.

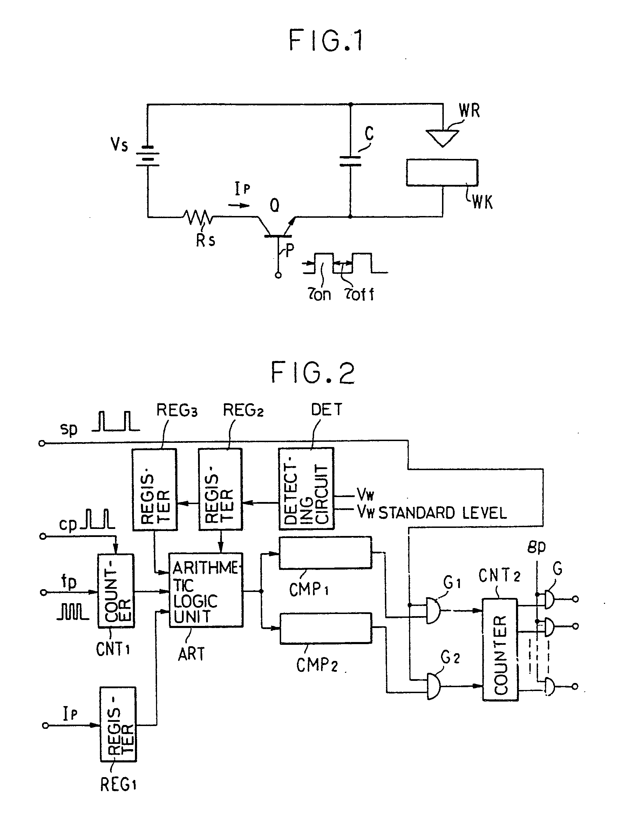

In Fig. 1 there is depicted an electric circuit diagram of a power source of a wire-cut, electric discharge machine employed for obtaining an optimum cutting condition formula which is used in the present embodiment of the present invention. Reference character $V_s$ indicates a no-load voltage; $R_s$ designates a charging resistor; $I_p$ identifies a peak current; Q denotes a transistor; P represents a pulse signal for driving the transistor Q $\tau_{on}$ and $\tau_{off}$ show the ON time and the OFF time of the pulse signal P; C refers to a capacitor; WR indicates a wire electrode; and WK designates a workpiece or work. According to the present inventor's experiments, in which a maximum cutting speed $F_m$ and a peak current $I_{pm}$ that would not cause shorting between the wire electrode WR and the work WK or breakage of the wire electrode WR were obtained for each of workpieces of different thicknesses but of the same material, using the power source circuit of Fig. 1 in which wire electrodes used were made of the same material and with the same diameter and the no-load voltage $V_s$, the ON time $\tau_{on}$ and the OFF time $\tau_{off}$ of the pulse signal P and the capacitance of the capacitor C were held unchanged, it has been found that the following expressions hold over a wide range of cutting:

$$F_m = \frac{K_1}{\sqrt{h}} - F_0 \tag{1}$$

$$I_{pm} = K_2 \sqrt{h} \tag{2}$$

Where h is the thickness of the work and $K_1$, $K_2$ and $F_0$ are constants which depend on electrical cutting conditions other than the peak current $I_p$, and also on the materials of the workpiece and the wire electrode and the diameter of the wire electrode. In the expressions (1) and (2), even if the cutting conditions other than the peak current are modified, only the constants $K_1$ and $K_2$ undergo changes and the forms of the expressions do not change.

Eliminating the thickness h of the workpiece from the expressions (1) and (2), the following expression is obtained:

$$(F_m + F_0)I_{pm} = K \tag{3}$$

where $K = K_1 K_2$ and the constant K is large or small depending on whether or not the material of the workpiece is easy to cut. The constant $F_0$ varies with the value of the constant K according to experiments but it can be estimated approximately by the following expression:

$$F_0 = F_1 + \alpha K \tag{4}$$

where $F_1$ is a constant which is determined by the electric circuit arrangement used and $\alpha$ is a sufficiently small constant. Accordingly, the constant $F_0$ can be regarded as constant in practice and it is fixed for each machine.

The present embodiment of the present invention is intended to automatically change over the electrical cutting condition in accordance with the thickness of a workpiece on the basis of the following principles, using the abovesaid expressions (3) and (4).

At first, the relative feed of the wire electrode and the workpiece to each other is controlled so that a mean working voltage between them may be constant. Such feed control has heretofore been carried out for preventing that the width of a groove of a cutting path varies with the thickness of the workpiece to degrade the cutting accuracy and many methods are known; accordingly, this control is effected by an arbitrary one of the known methods and need not therefore be described in more detail here. During the feed control for making the mean working voltage constant, if a peak current $I_p$ which is smaller than the $I_{pm}$ of maximum cutting speed condition given by the expression (3) is provided, that is, if the peak current $I_p$ remains unchanged regardless of an increase in the thickness of the workpiece, then the cutting speed F decreases and $(F + F_0)i_p$ becomes smaller than the constant K in the maximum cutting speed of the expression (3). Conversely, when the peak current $I_p$ is too large, the cutting speed F increases, resulting in $(F + F_0)I_p > K$. Accordingly, by controlling the feed to make the mean working voltage constant and, at the same time, detecting the cutting speed F and the peak current $I_p$ and checking them whether to satisfy the expression (3), the thickness of the workpiece can be decided. And by increasing or decreasing the peak current $I_p$ to meet the expression (3), the electrical cutting condition is automatically changed over in accordance with the thickness of the workpiece.

Fig. 2 illustrates in block form the principal part of an embodiment of the present invention. Reference characters CNT1 and CNT2 indicate counters; REG1 to REG3 designate registers; ART identifies an arithmetic logic unit; CMP1 and CMP2 denote decision circuits; DET represents a detector; G, G1 and G2 show AND circuits; Ip refers to a peak current; fp indicates feed pulses; cp designates a feed rate command value; sp identifies sampling pulses; and gp denotes gate pulses.

In Fig. 2, the present cutting speed F is detected by counting the feed pulses fp corresponding to a unit infeed of a work table by the counter CNT1 or setting the feed rate command value cp from a numerical control unit in the counter CNT1 and then the cutting speed F thus detected is provided to the arithmetic logic unit ART. Likewise, the present peak current Ip is set in the register REG1 and then applied to the arithmetic logic unit ART. The register REG2 has set therein the value K obtained experimentally and the register REG3 has set therein the value $F_0$ which is determined by the system of the discharge circuit employed in the power source of the wire-cut, electric discharge machine and these values are also applied to the arithmetic logic unit ART.

The arithmetic logic unit ART calculates $(F-F_0)Ip-K$ from the cutting speed F, the peak current Ip and the values K and $F_0$ and provides the calculation result to the decision circuits CMP1 and CMP2. The decision circuit CMP1 decides whether the calculation result is plus or not and, in the case of plus, decreases the value of the counter CNT2. The decision circuit CMP2 decides whether the calculation result is smaller than $-\delta$ or not and, if smaller, increases the value of the counter CNT2. $\delta$ is used to provide a hysteresis operation so that the value of the counter CNT2 may not frequently vary and it is set to a value sufficiently smaller than the value K.

The output from each stage of the counter CNT2 is provided via the AND circuit G to peak current changeover means (not shown) to control it to obtain the peak current value proportional to the content of the counter CNT2. As the peak current changeover means, use can be made of, for example, an arrangement in which several transistors Q such as shown in Fig. 1 are connected in parallel and the number of their operations is changed by the output from the counter CNT2, or an arrangement in which the value of the charging resistor Rs is changed by the output from the counter CNT2.

With the above-described arrangement, the peak current Ip can automatically be changed over in accordance with the thickness of a workpiece. The circuit shown in Fig. 2 is constructed so that a variation in a mean working voltage Vw is detected by the detector DET and the value K is reduced in accordance with the variation. The detector DET compares the variation of voltage Vw with the set level in detector DET, and if the variation is too high, provides a reducing signal to REG 2. Vw STANDARD LEVEL is the set working voltage level. The reason for this facility is as follows:

In wire-cut, electric discharge machining, cutting becomes unstable at a corner or small-radius, arcuate portion of a workpiece and the wire electrode is liable to be broken, so that the peak current Ip and other cutting conditions must be lightened at such a portion of the workpiece, and since the mean working voltage usually undergoes a substantial change at the portion where the cutting is unstable, the value K is decreased by using the change in the mean working voltage, which indicates that unstable cutting conditions prevail. This permits stable cutting of the workpiece even at its corners.

In the above embodiment the peak current Ip is measured but since it has been found by experiments that a relation similar to the expression (2) holds for a mean working current Iw, too, it is also possible to measure the mean working current Iw instead of the peak current Ip in Fig. 2 and automatically change over the peak current Ip in accordance with the thickness of the workpiece so that $(F-F_0)$ Iw$-$K=0.

As has been described in the foregoing, since the equipment is constructed based on the experimental formula for the optimum cutting condition, so electronic computer is needed and since the value $F_0$ is fixed for each machine, it is sufficient only to input thereto the value K obtainable by simple experiments; therefore, the equipment is far easier to operate than that of the prior art. In general, the value K is experimentally obtained for each of various cutting conditions on the part of the machine maker and it is sufficient for the user to set the value K based on the experimental values. Especially, even in the case where the cutting conditions such as the material of the workpiece, the capacitance of the capacitor and so forth have been changed, a new value K is determined only by experimental cutting of one workpiece and the peak current can automatically be changed over using the new value K. Accordingly, even in the case where the workpiece is made of a special material and no data on the value K are available from the machine maker, the workpiece can be cut with ease.

It will be apparent that many modifications and variations may be effected without departing from the scope of the novel concepts of this invention as defined by the following claims.

**Claims**

1. An automatic cutting condition control equipment for a wire-cut electric discharge machine, comprising a feed control circuit for controlling a cutting speed in dependence upon workpiece thickness and a cutting condition so that a mean working voltage between a cutting electrode and the workpiece may be substantially constant under stable cutting conditions, whereby when the control equipment is in use with a wire-cut electrical discharge machine, the electrical cutting condition of the cutting machine can be automatically controlled by the electrical cutting condition control equipment to be optimum in dependence upon the thickness of the workpiece being cut, the equipment being characterised by: an arithmetic logic unit for calculating as said cutting condition the result of an optimum cutting condition formula (F+Fo) I$-$K, where F is the cutting speed, I is the peak or mean cutting current, and Fo and K are constants under stable cutting conditions, which constants are determined by electrical cutting conditions other than the current and further by the materials of the workpiece and the wire electrode, and by the diameter of the wire electrode; and electrical cutting condition control means for controlling the value of the cutting current from a power source so that the output from the arithmetic logic unit may tend towards a value of zero.

2. An automatic cutting condition control equipment according to claim 1, wherein the electrical cutting condition control means comprises decision circuitry for detecting the result of the calculation of the optimum cutting condition formula and a counter for counting up or down in dependence upon the output from the decision circuitry, said electrical cutting condition control means being arranged for controlling the cutting current in dependence upon the output from the counter.

3. An automatic cutting condition control equipment according to claim 1 or 2, which further comprises a detector for detecting variation in the mean working voltage, and wherein the value K in the optimum cutting condition formula is decreased in dependence upon a variation in the mean working voltage indicating that unstable cutting conditions prevail.

4. An automatic cutting condition control equipment according to any one of the preceding claims, which is constructed as an automatic cutting condition changeover equipment, the electrical cutting condition control means being changeover means.

5. An automatic cutting condition control equipment according to any one of the preceding claims, when in operable combination with a wire-cut electrical discharge machine.

**Patentansprüche**

1. Vorrichtung zum Regeln des Schneidzustands für eine Schneiddraht-Funkenerosionsmaschine, mit einer Vorschubsteuerschaltung zum Steuern einer Schneidgeschwindigkeit in Abhängigkeit von der Werkstückdicke und einem Schneidzustand, so daß eine mittlere Arbeitsspannung zwischen einer Schneidelektrode und dem Werkstück unter stabilen Schneidebedingungen im wesentlichen konstant sein kann, wodurch, wenn die Regel-Vorrichtung zusammen mit einer Schneiddraht-Funkenerosionsmaschine verwendet wird, der elektrische Schneidzustand der Funkenerosionsmaschine automatisch durch die Regel-Vorrichtung des elektrischen Schneidzustands derart gesteuert werden kann, daß dieser in Abhängigkeit von der Dicke des Werkstücks, das geschnitten wird, optimal ist, gekennzeichnet ist durch eine arithmetische Logik-Einheit zum Berechnen als dem Schneidzustand das Ergebnis einer Optimalschneidzustandsformel

$$(F+Fo)I-K$$

mit F=Schneidgeschwindigkeit, I=Spitzenstrom oder der mittlere Schneidestrom und Fo und K=Konstanten unter stabilen Schneidbedingungen, wobei die Konstanten durch andere elektrische Schneidbedingungen als den Strom und ferner durch die Materialien des Werkstücks und der Drahtelektrode sowie den Durchmesser der Drahtelektrode bestimmt sind, und eine elektrische Schneidzustandssteuereinrichtung zum so Steuern des Wertes des Schneidstroms von einer Stromquelle, daß das Ausgangssignal der arithmetischen Logik-Einheit gegen eine Wert Null gehen kann.

2. Vorrichtung zum Regeln des Schneidzustands nach Anspruch 1, bei der die elektrische Schneidzustandssteuereinrichtung eine Entscheidungsschaltungsanordnung zum Erfassen des Ergebnisses der Berechnung der Optimalschneidzustandsformel und einen Zähler zum Vorwärts- und Rückwärtzählen in Abhängigkeit von dem Ausgangssignal aus der Entscheidungsschaltungsanordnung enthält, wobei die elektrische Schneidzustandssteuereinrichtung zum Steuern den Schneidstrom in Abhängigkeit von dem Ausgangssignal des Zählers ausgebildet ist.

3. Vorrichtung zum Regeln des Schneidzustands nach Anspruch 1 oder 2, die desweiteren einen Detektor zum Erfassen der Änderung der mittleren Arbeitsspannung enthält und in der der Wert K in der Optimalschneidzustandsformel in Abhängigkeit von einer Änderung der mittleren Arbeitsspannung herabgesetzt wird, die anzeigt, daß unstabile Schneidzustände vorherrschen.

4. Vorrichtung zum Regeln des Schneidzustands nach einem der vorhergehenden Ansprüche, die als automatische Schneidzustands-Umschaltvorrichtung ausgebildet ist, wobei die elektrischen Schneidzustandssteuereinrichtung eine Umschalteinrichtung ist.

5. Vorrichtung zum Regeln des Schneidzustands nach einem der vorhergehenden Ansprüche in Betriebsverbindung mit einer Schneiddraht-Funkenerosionsmaschine.

**Revendications**

1. Un dispositif de commande automatique de conditions de coupe pour une machine d'électro-érosion à fil, comprenant un circuit de commande d'avance destiné à commander une vitesse de coupe sous la dépendance de l'épaisseur d'une pièce et d'une condition de coupe, de façon qu'une tension de fonctionnement moyenne entre une électrode de coupe et la pièce puisse être pratiquement constante dans des conditions de coupe stables, grâce à quoi lorsque le dispositif de commande est utilisé avec une machine d'électro-érosion à fil, la condition électrique de coupe de la machine de coupe peut être commandée automatiquement par le dispositif de commande automatique de conditions électriques de coupe de façon à être optimale, en fonction de l'épaisseur de la pièce qui est coupée, ce dispositif étant caractérisé par: une unité arithmétique et logique destinée à calculer pour ladite condition de coupe le résultat d'une formule de condition de coupe optimale: $(F+F_0)I-K$ dans laquelle F est la vitesse de coupe, I est le courant de coupe de crête ou moyen et Fo et K sont des constantes dans des conditions de coupe stables, ces constantes étant déterminées par des conditions électriques de coupe autres que le courant, ainsi que par les matières de la pièce et de l'électrode en forme de fil, et par le diamètre de l'électrode en forme de fil; et des moyens de commande de conditions électriques de coupe, destinés à commander la valeur du courant de coupe provenant d'une source d'alimentation, de façon que le signal de sortie de l'unité arithmétique et logique puisse tendre vers une valeur égale à zéro.

2. Un dispositif de commande automatique de conditions de coupe selon la revendication 1, dans lequel les moyens de commande de conditions électriques de coupe comprennent un circuit de décision destiné à détecter le résultat du calcul de la formule de condition de coupe optimale, et un compteur destiné à compter en sens croissant ou décroissant sous la dépendance du signal de sortie du circuit de décision, ces moyens de commande de conditions électriques de coupe étant conçus de façon à commander le courant de coupe sous la dépendance du signal de sortie du compteur.

3. Un dispositif de commande automatique de conditions de coupe selon la revendication 1 ou 2, qui comprend en outre un détecteur destiné à détecter une variation de la tension de fonctionnement moyenne, et dans lequel la valeur K dans la formule de condition de coupe optimale est diminuée sous la dépendance d'une variation de la tension de fonctionnement moyenne, indiquant l'existence de conditions de coupe instables.

4. Un dispositif de commande automatique de conditions de coupe selon l'une quelconque des revendications précédentes, qui est construit sous la forme d'un dispositif de changement automatique de conditions de coupe, dans lequel les moyens de commande de conditions électriques de coupe sont des moyens de changement de conditions.

5. Un dispositif de commande automatique de conditions de coupe selon l'une quelconque des revendications précédentes, associé fonctionnellement à une machine d'électro-érosion à fil.

FIG.1

FIG.2